Europäisches Patentamt

European Patent Office

Office européen des brevets

(11) Veröffentlichungsnummer: **0 199 228 B1**

# EUROPÄISCHE PATENTSCHRIFT

(45) Veröffentlichungstag der Patentschrift: **11.09.91**

(51) Int. Cl.5: **B32B 7/02**, B32B 15/08

(21) Anmeldenummer: **86105045.8**

(22) Anmeldetag: **12.04.86**

(54) **Metallisierte Verbundfolie aus zwei mit Klebstoff verbundenen Kunststoffilmen.**

(30) Priorität: **23.04.85 DE 3514569**

(43) Veröffentlichungstag der Anmeldung:
**29.10.86 Patentblatt 86/44**

(45) Bekanntmachung des Hinweises auf die
Patenterteilung:
**11.09.91 Patentblatt 91/37**

(84) Benannte Vertragsstaaten:
**BE DE FR GB IT NL**

(56) Entgegenhaltungen:
**EP-A- 0 004 633**
**EP-A- 0 173 277**
**DE-A- 2 756 497**
**GB-A- 2 119 707**

(73) Patentinhaber: **HOECHST AKTIENGESELL-
SCHAFT**
**Postfach 80 03 20**
**W-6230 Frankfurt am Main 80(DE)**

(72) Erfinder: **Bothe, Lothar, Dr.**
**Am Heiligenhaus 9**
**W-6500 Mainz-Gonsenheim(DE)**
Erfinder: **Janocha, Siegfried, Dr.**
**Weinfeldstrasse 28**
**W-6200 Wiesbaden(DE)**
Erfinder: **Crass, Günther**
**Bachstrasse 7**
**W-6204 Taunusstein 4(DE)**

## Beschreibung

Die Erfindung betrifft eine metallisierte Verbundfolie aus zwei mit Klebstoff verbundenen Kunststoffilmen, wobei mindestens einer der beiden Filme an seiner Innenfläche eine Metallschicht trägt und wobei einer der beiden Filme aus einem transparenten Kunststoffilm besteht.

Eine solche Verbundfolie ist aus der deutschen Offenlegungsschrift 2 756 497 bekannt, die der US-Patentschrift 4 211 811 entspricht. Dabei besteht auch der andere der beiden Filme aus einem transparenten Kunststoffilm. Diese Verbundfolie entspricht zwar hinsichtlich Undurchlässigkeit für Licht, Wasserdampf, Gase, Aroma- und Riechstoffe weitgehend den entsprechenden Forderungen, sie weist jedoch ein relativ unvorteilhaftes Aussehen auf.

Aus der europäischen Patentanmeldung 0 038 022 ist ebenfalls eine metallisierte Verbundfolie aus zwei mit Klebstoff verbundenen Filmen (Schichten) bekannt. Dabei besteht eine der beiden Schichten aus einem transparenten Kunststoffilm, der auf mindestens einer Seite mit einer metallisierten Schicht beschichtet ist. Bei dieser Verbundfolie besteht die andere der beiden Schichten aus Papier oder Karton. Der Nachteil dieser Verbundfolie liegt insbesondere darin, daß sie aufgrund des Papier- oder Kartonfilmes beispielsweise nicht wasserfest ist. Es sind auch schon ein- oder mehrschichtige, opake Kunststoffolien oder -filme bekannt. So wird in den beiden europäischen Patentanmeldungen 0 004 633 und 0 083 495 eine durch Coextrusion hergestellte und biaxial gestreckte, opake Polyolefin-Folie beschrieben, die aus einer opaken Trägerfolie (als Basisschicht oder Mittelschicht) und zwei transparenten oder glasklaren Außenschichten (Deckschichten) aufgebaut ist. Die im Vergleich zu den Deckschichten beträchtlich dickere Trägerfolie ist einschichtig und besteht aus Polyolefin und Füllstoffen. Ihre Opazität resultiert daher, daß aufgrund des Füllstoffgehaltes und des biaxialen Streckens eine große Anzahl von Mikrohohlräumen (Vakuolen) vorhanden sind. Beim Strecken wird die Polymermatrix an den Korngrenzen der mit dem Polylolefin unverträglichen anorganischen oder organischen Füllstoffe aufgerissen, was zur Entstehung der genannten Mikrohohlräume, das heißt, zu freien (leeren oder ungefüllten) Räumen führt. (Es versteht sich von selbst, daß diese Vakuolen oder Mikrohohlräume über das ganze Volumen der Trägerfolie verteilt sind.) Durch die Brechung (Streuung) des Lichtes an den Hohlräumen wird das opake Aussehen verursacht. Diese Folien oder Filme besitzen zwar ein sehr vorteilhaftes und werbewirksames Aussehen, sie sind jedoch wegen ihrer hohen Dampf-, Gas- und Aromadurchlässigkeit zum Verpacken von empfindlichen Gütern wie Schokolade, Kaffee, Salzletten, Marzipan und dergleichen nicht geeignet.

Die Aufgabe der Erfindung besteht demnach darin, eine Verbundfolie der eingangs genannten Art zu schaffen, die sowohl ein vorteilhaftes und werbewirksames Aussehen, als auch hervorragende Barriere-Eigenschaften besitzt. Unter Barriere-Eigenschaften wird insbesondere eine geringe Lichtdurchlässigkeit, eine geringe Wasserdampf-Durchlässigkeit, eine geringe Gasdurchlässigkeit und eine gute Aroma- und Riechstoff-Dichtheit verstanden. Diese Barriere-Eigenschaften, vor allem die ersten drei, sind besonders wichtig für die Verpackung von oxidationsempfindlichen Lebens- und Genußmitteln.

Die erfindungsgemäße metallisierte Verbundfolie aus zwei mit Klebstoff verbundenen Kunststoffilmen, wobei mindestens einer der beiden Filme an seiner Innenfläche mit einer Metallschicht versehen ist und wobei einer der beiden Filme aus einem transparenten Kunststoffilm besteht, ist dadurch gekennzeichnet, daß der transparente Film aus einer biaxial orientierten Polyesterfolie, insbesondere Polyethylenterephthalatfolie, besteht und daß der andere Film aus einer opaken biaxial orientierten Folie auf Basis von Propylenpolymeren besteht, dessen Opazität auf Mikrohohlräumen in dem Film beruht und dessen Dichte kleiner als 0,8 g/cm$^3$ ist.

Es ist bevorzugt, daß die Verbundfolie eine Metallschicht aufweist, und zwar an der Innenfläche des transparenten Kunststoffilmes (die Innenfläche der Filme sind jene Flächen, die im fertigen Verbund einander zugewandt sind).

Der transparente (unter transparent wird mehr oder weniger klar bis glasklar verstanden) und/oder der opake Kunststoffilm können ein- oder mehrschichtig, vorzugsweise zwei- oder dreischichtig, aufgebaut sein. Beim zweischichtigen Aufbau besteht der transparente Kunststoffilm aus zwei transparenten Schichten (der Basisschicht und der Deckschicht) und der opake Kunststoffilm aus einer opaken Schicht (Basisschicht) und einer transparenten Schicht (Deckschicht); in beiden Fällen ist die transparente Deckschicht die Außenschicht der fertigen Verbundfolie. Beim dreischichtigen Aufbau besteht der transparente Kunststoffilm aus einer transparenten Mittelschicht (Basisschicht) und zwei transparenten Deckschichten und der opake Kunststoffilm aus einer opaken Mittelschicht (Basisschicht) und zwei transparenten Deckschichten.

Die genannten einseitig oder beidseitig vorliegenden zusätzlichen Schichten (Deckschichten) des mehrschichtigen Kunststoffilms sind vorzugsweise Siegelschichten. Die mehrschichtigen Kunststoffilme sind vorzugsweise durch Coextrusion hergestellt.

Polyester sind vorzugsweise Polyethylenterephthalate (Homo- oder Copolymere). Es versteht sich von selbst, daß der Kunststoff der Siegelschichten einen niedrigeren Schmelzpunkt aufweist als der Kunststoff der Basisschichten der mehrschichtigen Kunststoffilme.

Der opake Kunststoffilm, und im Falle von mehrschichtigen Kunststoffilmen die Basisschichten, besteht vorzugsweise aus Propylenhomopolymeren, Propylencopolymeren (Blockcopolymeren oder statischen Copolymeren) mit maximal 20 Gew.-% Comonomer-Anteil oder aus Mischungen dieser Polymeren. Der Schmelzpunkt dieser Propylenpolymeren liegt im allgemeinen bei etwa 140 °C oder höher, vorzugsweise 150 bis 170 °C. Isotaktisches Polypropylen mit einem n-heptanlöslichen Anteil von 15 Gew.-% oder weniger, Copolymere von Propylen und Ethylen mit einem Ethylen-Gehalt von 10 Gew.-% oder weniger, Copolymere von Propylen mit Ethylen und/oder Buten mit einem Ethylen- und Butengehalt von insgesamt 10 Gew.-% oder weniger, stellen bevorzugte Propylenpolymere dar, wobei isotaktisches Polypropylen besonders bevorzugt ist. Das Propylenpolymere des opaken Kunststoffilmes beziehungsweise der Basisschichten hat im allgemeinen einen Schmelzfluß-Index von 0,5 g/10 min bis 10 g/10 min, vorzugsweise 1,5 g/10 min bis 4 g/10 min, bei 230 °C und 21N (2,16 kp) Belastung (DIN 53 735).

Die Siegelschichten der mehrschichtigen Kunststoffilme bestehen vorzugsweise aus Propylencopolymeren (Propylen ist die Hauptkomponente). Bevorzugt sind Propylen-Ethylen-Copolymere mit vorzugsweise 2 bis 10 Gew.-% Ethylen, Propylen-Butylen-Copolymere mit vorzugsweise 0,5 bis 20 Gew.-% Butylen, Ethylen-Propylen-Butylen-Terpolymere mit vorzugsweise 0,5 bis 7 Gew.-% Ethylen und 5 bis 30 Gew.-% Butylen oder Mischungen aus diesen Polymeren (Gewichtsprozente bezogen auf das Gesamtgewicht des Copolymeren beziehungsweise Terpolymeren). Der Schmelzpunkt des Polymeren für die Siegelschichten liegt im allgemeinen bei 80 bis 160 °C, vorzugsweise 100 bis 140 °C. Der Schmelzfluß-Index dieses Polymeren liegt höher als jener des Polymeren der Basisschicht und beträgt im allgemeinen 1 bis 12 g/10 min, vorzugsweise 3 bis 9 g/10 min, bei 230 °C und 21N (2,16 kp) Belastung (DIN 53 735).

Die beiden Kunststoffilme beziehungsweise die Schichten, welche die erfindungsgemäße Verbundfolie bilden, können auch zweckmäßige Additive wie Gleitmittel, Stabilisatoren, Farbstoffe, Antistatika, Antiblockmittel und dergleichen in einer jeweils wirksamen Menge enthalten.

Die einschichtigen Kunststoffilme werden vorzugsweise durch Extrusion und die mehrschichtigen Kunststoffilme durch Coextrusion hergestellt. Sowohl die Extrusion als auch die Coextrusion von Kunststoffen sind wohlbekannte Verfahren.

Die Opazität des opaken Kunststoffilmes beziehungsweise der opaken Basisschicht beruht auf Mikrohohlräumen in dem Film beziehungsweise in der Schicht. Es handelt sich also, wie eingangs erwähnt, um einen Film (Schicht), der (die) im wesentlichen aus Kunststoff als Hauptkomponente und Füllstoff besteht und biaxial gestreckt worden ist. Füllstoffe sind anorganische und organische, mit dem Kunststoff unverträgliche, pulverförmige Materialien. Beispiele für organische Füllstoffe sind Polyacrylate, Polyamide, Epoxidharze, Polyvinylacetate und Fluor enthaltende Polymere. Anorganische Füllstoffe sind bevorzugt. Geeignete anorganische Füllstoffe sind Sulfate, wie Aluminiumsulfat, Bariumsulfat und Calciumsulfat; Carbonate, wie Calciumcarbonat und Magnesiumcarbonat; Silicate, wie Aluminiumsilicat (Kaolinton) und Magnesiumsilicat (Talkum); Oxide, wie Aluminiumoxid, Magnesiumoxid, Siliciumoxid, Titanoxid und Zinkoxid; und Salze organischer Säuren, wie Benzoate und Citrate. Von den anorganischen Füllstoffen werden Calciumcarbonat, Siliciumdioxid, Titandioxid oder Mischungen davon bevorzugt eingesetzt. Calciumcarbonat (Kreide) ist besonders bevorzugt. Die Menge an Füllstoff liegt bei 5 bis 30 Gew.-%, vorzugsweise 8 bis 20 Gew.-%, bezogen auf das Gesamtgewicht der Mischung von Kunststoff und Füllstoffen. Die mittlere Teilchengröße des pulverförmigen Füllstoffs liegt im Bereich vom 0,5 bis 10 μm, vorzugsweise im Bereich von 2 bis 5 μm.

Die biaxiale Streckorientierung des Füllstoff enthaltenden Kunststoffilmes (ein- oder mehrschichtig) auf Basis von Propylenpolymeren wird in Längsrichtung vorzugsweise bei einer Temperatur von 120 bis 130 °C und mit einem Längsstreckverhältnis von 5 bis 7:1 und in Querrichtung vorzugsweise bei einer Temperatur von 160 bis 180 °C und mit einem Querstreckverhältnis von 8 bis 10:1 durchgeführt, wobei zuerst längsgestreckt wird und wobei gleichzeitig durch die relativ niedrige Längsstrecktemperatur das eingangs erwähnte Aufreißen der Polymermatrix gefördert wird. Aus dem genannten Füllstoff und der angegebenen biaxialen Streckorientierung resultieren die für das opake Aussehen des Filmes erforderlichen Mikrohohlräume.

Die Dicke der beiden Kunststoffilme, welche die erfindungsgemäße Verbundfolie bilden, kann innerhalb weiter Grenzen variieren. Die Dicke (Gesamtdicke) eines Kunststoffilmes beträgt im allgemeinen 10 bis 100 μm, vorzugsweise 20 bis 60 μm. Die Deckschichten oder Siegelschichten sind etwa 0,2 bis 3 μm dick, vorzugsweise 0,5 bis 1,5 μm.

Die Metallschicht kann aus jedem geeigneten Metall bestehen. Bevorzugt sind Schichten aus Aluminium, Zink, Gold oder Silber oder aus entsprechenden Legierungen, wobei Aluminium oder aluminiumhaltige Legierungen besonders bevorzugt sind. Als geeignete Metallisierungsverfahren seien die Elektroplattierung, das Besputtern und die Vakuumbedampfung genannt, wobei die Vakuumbedampfung bevorzugt ist. Um eine besonders gute Haftung der Metallschicht auf der zu metallisierenden Fläche zu erreichen, wird diese Fläche vorher einer Koronabehandlung unterworfen, das heißt, durch Anlegen einer Wechselspannung von etwa 10 000 V und 10 000 Hz einer Koronaentladung ausgesetzt.

Die Dicke der Metallschicht beträgt etwa 20 bis 1000 nm, vorzugsweise 25 bis 100 nm.

Die Klebstoffschicht, mit der die beiden Kunststoffilme aneinander haften, wird vorzugsweise auf die nichtmetallisierte Innenfläche aufgebracht (die nicht-metallisierte Innenfläche ist, wie oben bereits erwähnt, vorzugsweise die Innenfläche des opaken Kunststoffilmes). Zum Aufbringen des Klebstoffs kann jedes geeignete Verfahren angewandt werden. Er wird vorzugsweise durch Auftragen aus Lösungen oder Dispersionen in Wasser oder organischen Lösungsmitteln aufgebracht. Die Lösungen oder die Dispersionen haben in der Regel einen Klebstoffgehalt von etwa 5 bis 60 Gew.-%. Die aufgebrachte Klebstoffmenge beträgt in der Regel etwa 1 bis 10 g/m² Fläche. Besonders geeignete Klebstoffe sind die synthetischen Klebstoffe, bestehend aus thermoplastischen Harzen wie Celluloseester, Celluloseether, Alkyl- oder Acrylester, Polyamide, Polyurethane und Polyester, aus wärmehärtenden Harzen wie Epoxyharzen, Harnstoff/Formaldehydharzen, Phenol/Formaldehydharzen und Melamin/Formaldehydharzen oder aus synthetischen Kautschuken.

Die Herstellung der erfindungsgemäßen Verbundfolie erfolgt durch Zusammenfügen der beiden Kunststoffilme mit Hilfe der Klebstoffschicht. Das Zusammenfügen kann nach jedem geeigneten Verfahren durchgeführt werden, wobei das Zusammenwalzen oder Zusammenpressen der beiden Kunststoffilme bevorzugt ist. Nach einer besonders bevorzugten Herstellung der erfindungsgemäßen Verbundfolie werden die beiden Kunststoffilme (die, wie oben angegeben, mit Klebstoffschicht und Metallschicht versehen sind) durch eine oder mehrere Walzenpaare, die auf 50 bis 80 °C erhitzt sind, hindurchgeführt, wobei durch den Druck im Spalt des Walzenpaares oder der Walzenpaare die Laminierung der Kunststoffilme bewirkt wird. Die erfindungsgemäße Verbundfolie ist etwa 20 bis 200 μm dick, vorzugsweise 40 bis 120 μm.

Die erfindungsgemäße Verbundfolie hat sehr gute Barriere-Eigenschaften. Sie besitzt neben einer hohen Aroma- und Riechstoff-Dichtheit eine besonders geringe Gasdurchlässigkeit, Wasserdampf-Durchlässigkeit und Lichtdurchlässigkeit. Sie weist auch ein äußerst werbewirksamen Aussehen auf, was einen weiteren großen Vorteil darstellt. Die erfindungsgemäße Verbundfolie weist ferner eine relativ niedrige Dichte auf, was insbesondere aus der sehr niedrigen Dichte des opaken Kunststoffilmes resultiert. Der erfindungsgemäß vorgeschlagene opake Kunststoffilm besitzt eine Dichte von weniger als 0,8 g/cm³; sie liegt in der Regel im Bereich von 0,4 bis 0,75 g/cm³.

Die erfindungsgemäße Verbundfolie kann überall dort eingesetzt werden, wo das obengenannte Eigenschaftsbild verlangt wird. Sie ist insbesondere für das Gebiet der Lebensmittel- und Genußmittel-Verpackung vorgesehen. Sie wird bevorzugt zur Verpackung von oxidationsempfindlichen Lebens- und Genußmitteln verwendet, wozu vor allem fetthaltige Produkte zählen.

Die Erfindung wird anhand des folgenden Beispiels näher erläutert.

Beispiel

Eine Verbundfolie gemäß Erfindung wird durch Zusammenführen und Zusammenpressen der beiden nachstehend angegebenen Kunststoffilme erhalten:

Der Film 1 ist ein durch Verstrecken in Längsrichtung (Streckverhältnis 6:1, Strecktemperatur 125 °C) und in Querrichtung (Streckverhältnis 9:1, Strecktemperatur 165 °C) orientierter, opaker Polypropylen-Film, der einseitig mit einem Klebstoff beschichtet ist; der opake Polypropylen-Film hat den folgenden Aufbau und die folgenden Eigenschaften:

Basisschicht:
Sie besteht aus einem isotaktischen Polypropylen (n-heptanlöslicher Anteil 8 Gew.-%, Schmelzpunkt 160 °C, Schmelzindex 3 g/10 min bei 230 °C und 21N (2,16 kp) Belastung) als Hauptkomponente und 10 Gew.-% Calciumcarbonat mit einem mittleren Teilchendurchmesser von 4 μm: sie ist 23 μm dick
Siegelschichten, beidseitig:
Sie bestehen aus einem statischen Ethylen-Propylen-Copolymeren mit 5 Gew.-% Ethylen (Propylen ist die Hauptkomponente) und sind jeweils 1 μm dick
Klebstoffschicht:
Sie besteht aus einem synthetischen Kautschukklebstoff; die Klebstoffmenge (Dicke) beträgt 5 g/m³
Dicke (Gesamtdicke):
25 μm (Klebstoffschicht ist vernachlässigbar)
Dichte:
0,75 g/cm³
Opazität:
45.

Der Film 2 ist ein durch Verstrecken in Längsrichtung (Streckverhältnis 3,5:1, Strecktemperatur 95 °C) und in Querrichtung (Streckverhältnis 3,5:1, Strecktemperatur 105 °C) orientierter glasklarer Polyesterfilm, der einseitig mit Aluminium metallisiert ist; er hat den folgenden Aufbau und die folgenden Eigenschaften:

Der Polyester-Film ist aus Polyethylenterephthalat gebildet; er besteht aus einer Schicht (Basisschicht ohne Siegelschichten) und ist 20 μm dick.

Die Aluminiumschicht ist 50 nm dick.

Die beiden Filme sind so aneinandergefügt, daß die Klebstoffschicht und die Metallschicht im Innern der Verbundfolie liegen.

Die Verbundfolie ist 45 μm dick (die Klebstoffschicht und die Metallschicht sind nicht berücksichtigt).

Die Verbundfolie des Beispiels zeigt eine Gasdurchlässigkeit (Sauerstoff als Gas) von kleiner als 1 cm$^3$/m$^2$ d bar (DIN 53 380), eine Wasserdampf-Durchlässigkeit von kleiner als 0,1 g/m$^2$d (DIN 53 122) und eine Lichtdurchlässigkeit (ASTM 1003) von jeweils kleiner als 1 %, gemessen für sichtbares Licht (800 bis 400 nm) und UV-Licht (400 bis 300 nm).

## Patentansprüche

1. Metallisierte Verbundfolie aus zwei mit Klebstoff verbundenen Kunststoffilmen, wobei mindestens einer der beiden Filme an seiner Innenfläche eine Metallschicht trägt und wobei einer der beiden Filme aus einem transparenten Kunststoffilm besteht, dadurch gekennzeichnet, daß der transparente Film aus einer biaxial orientierten Polyesterfolie, insbesondere Polyethylenterephthalatfolie, besteht und daß der andere Film aus einer opaken biaxial orientierten Folie auf Basis von Propylenpolymeren besteht, dessen Opazität auf Mikrohohlräumen in dem Film beruht und dessen Dichte kleiner als 0,8 g/cm$^3$ ist.

2. Verbundfolie nach Anspruch 1, dadurch gekennzeichnet, daß die Dichte der opaken Folie 0,4 bis 0,75 g/cm$^3$ beträgt.

3. Verbundfolie nach Anspruch 1 oder 2, dadurch gekennzeichnet, daß die opake Folie aus einer opaken Basisschicht und ein- oder beidseitig vorhandenen transparenten Deckschichten besteht.

4. Verbundfolie nach einem der Ansprüche 1 bis 3, dadurch gekennzeichnet, daß der transparente Film zwei- oder dreischichtig aufgebaut ist.

5. Verbundfolie nach einem der Ansprüche 1 bis 4, dadurch gekennzeichnet, daß die opake Folie zur Erzeugung von Mikrohohlräumen 5 bis 30 Gew.-% eines anorganischen Füllstoffes mit einer mittleren Teilchengröße von 0,5 bis 10 μm enthält und biaxial gestreckt worden ist, Gewichtsprozente bezogen auf das Gesamtgewicht der Mischung aus Kunststoff plus Füllstoff.

6. Verbundfolie nach einem der Ansprüche 1 bis 5, dadurch gekennzeichnet, daß die Polyesterfolie auf ihrer Innenseite eine Metallschicht aufweist.

7. Verfahren zur Herstellung der Verbundfolie nach Anspruch 1, dadurch gekennzeichnet, daß man eine transparente biaxial orientierte Polyesterfolie mit ihrer metallisierten Innenseite mit einer opaken biaxial orientierten Folie auf Basis von Propylenpolymeren mit einer Klebstoffschicht verbindet, wobei die Opazität der Folie auf Mikrohohlräumen beruht und die Dichte dieser Folie kleiner als 0,8 g/cm$^3$ ist.

## Claims

1. Metallized composite film comprised of two plastics films joined by means of an adhesive, with the internal surface of at least one of the two films being provided with a metal layer and one of the two films being comprised of a transparent plastics film, characterized in that the transparent film is comprised of a biaxially oriented polyester film, particularly of a polyethylene terephthalate film, and that the other film is comprised of an opaque, biaxially oriented film based on propylene polymers, whose opacity results from microcavities in the film and whose density is less than 0.8 g/cm$^3$.

2. Composite film as claimed in claim 1, characterized in that the opaque film has a density of 0.4 to 0.75 g/cm$^3$.

3. Composite film as claimed in claim 1 or 2, characterized in that the opaque film comprises an opaque base layer and transparent top layers provided on one or the two surfaces thereof.

4. Composite film as claimed in any of claims 1 to 3, characterized in that the transparent film is a two- or threelayered film.

5. Composite film as claimed in any of claims 1 to 4, characterized in that the opaque film contains 5 to 30 percent by weight of an inorganic filler having an average particle size of 0.5 to 10 μm, and has been biaxially oriented, in order to produce microcavities, the percentages by weight being related to the total weight of the mixture of plastics material plus filler.

6. Composite film as claimed in any of claims 1 to 5, characterized in that the internal surface of the polyester film is metallized.

7. Process for producing the composite film as claimed in claim 1, characterized in that the metallized internal surface of a transparent, biaxially oriented polyester film is bonded to an opaque, biaxially oriented film based on propylene polymers by means of an adhesive layer, the opacity of the film resulting from microcavities and the density of this film being less than 0.8 g/cm³.

**Revendications**

1. Feuille composite métallisée, qui comporte deux films en matière plastique liés par adhésif, l'un au moins des deux films étant pourvu, à sa face interne, d'une couche métallique, et l'un des deux films étant un film transparent en matière plastique, caractérisée en ce que le film transparent comprend une feuille en polyester orientée biaxialement, en particulier une feuille en poly(téréphtalate d'éthylène), et que l'autre film comprend une feuille opaque à base de polymères de propylène, orientée biaxialement, dont l'opacité repose sur des microcavités au sein du film et dont la densité est inférieure à 0,8 g/cm³.

2. Feuille composite selon la revendication 1, caractérisée en ce que la densité de la feuille opaque est comprise entre 0,4 et 0,75 g/cm³.

3. Feuille composite selon l'une des revendications 1 ou 2, caractérisée en ce que la feuille opaque comprend une couche opaque de base et des couches de recouvrement transparentes, présentes sur une ou deux des faces.

4. Feuille composite selon l'une des revendications 1 à 3, caractérisée en ce que le film transparent a une structure à deux ou à trois couches.

5. Feuille composite selon l'une des revendications 1 à 4, caractérisée en ce que la feuille opaque renferme, pour produire des microcavités, 5 à 30 % en poids d'une charge minérale de taille particulaire moyenne 0,5 à 10 μm, et

en ce qu'elle a été étirée biaxialement, les pourcentages pondéraux étant rapportés au poids total du mélange matière plastique plus charge.

6. Feuille composite selon l'une des revendications 1 à 5, caractérisée en ce que la feuille en polyester présente une couche métallique sur sa face interne.

7. Procédé de fabrication de la feuille composite selon la revendication 1, caractérisé en ce qu'on lie, à l'aide d'une couche adhésive, une feuille transparente en polyester, orientée biaxialement et dont la face interne est métallisée, avec une feuille opaque à base de polymères de propylène, orientée biaxialement, l'opacité de la feuille reposant sur l'existence de microcavités et la densité de ladite feuille étant inférieure à 0,8 g/cm³.